Europäisches Patentamt

European Patent Office

Office européen des brevets

(11) Publication number: **0 119 240**
**B1**

## EUROPEAN PATENT SPECIFICATION

(45) Date of publication of patent specification: **13.08.86**

(51) Int. Cl.⁴: **B 64 F 1/00**

(21) Application number: **83902965.9**

(22) Date of filing: **06.09.83**

(86) International application number:
**PCT/SE83/00312**

(87) International publication number:
**WO 84/01141 29.03.84 Gazette 84/09**

(54) SYSTEM FOR THE AUTOMATIC IDENTIFICATION OF AIRCRAFT.

(30) Priority: **20.09.82 SE 8205389**

(43) Date of publication of application:
**26.09.84 Bulletin 84/39**

(45) Publication of the grant of the patent:
**13.08.86 Bulletin 86/33**

(84) Designated Contracting States:
**DE FR GB NL**

(56) References cited:
**SE-B- 403 999**

(73) Proprietor: **ANDERBERG, Nils-Eric**
**Box 589**
**S-231 00 Trelleborg (SE)**

(72) Inventor: **ANDERBERG, Nils-Eric**
**Box 589**
**S-231 00 Trelleborg (SE)**

(74) Representative: **Franzén, Lars Hjalmar et al**
**AWAPATENT AB Box 5117**
**S-200 71 Malmö (SE)**

## Description

The present invention relates generally to a system for the automatic identification of different types of aircraft moving on the ground, more particularly a system which, without human assistance, automatically and with great reliability and accuracy can identify different types of aircraft conducted by pilots at an airport.

So far as is known, there exists no previous system of this type, and this means, inter alia, that the recommendations drawn up by for example the U.N. agency ICAO concerning visual docking or parking guidance systems cannot be satisfied. It is recommended, among other things, that the system if possible should not require the assistance of ground personnel in order to put it into readiness for a specific type of aircraft. If such assistance is required, the system must be so designed that the pilot can make a double check.

The above-mentioned recommendations are satisfied by the present invention, and this will mean considerable advantages to the pilot and airlines which at present have to depend on the personnel on the ground. The system according to the invention affords not only a gain of time and greater safety, but also considerable financial savings in that less pesonnel is required and the time spent on the ground can be cut down. One example of delaying effects is incorrect setting of the above-mentioned visual marking guidance system due to incorrect handling by the ground personnel, which may result in wrongly parked aircraft, waiting times and even damage to the aircraft.

Furthermore, the system according to the invention can be used for automatically presetting and connecting such loading bridges or ramps as are used by passengers leaving and boarding aircraft. A further considerable advantage of the system according to the invention is that it eliminates, in the type of parking guidance systems with sensing elements in the ground within the area where the aircraft is to be parked automatically, such interference as is caused by different types of vehicles driving over the sensing elements and thus interfering with the system, whereby the aircraft is delayed. The system according to the invention has a built-in safety against such inference.

The primary object of the invention is to provide a system of the type indicated, which satisfies all requirements for reliability, flexibility and accuracy and which is specifically adapted to aircraft arriving at civil airports to be stopped exactly at a passenger loading bridge or other exactly predetermined stopping points in the aircraft parking facilities of the airport.

Another object of the invention is to design the systems in such a way that it is applicable to all aircraft types known at present; the system also is readily adaptable to future types of aircraft.

Still another object of the invention is to increase the safety and operational reliability and to shorten the time which the aircraft spends on the ground, thereby to make it easier for the airlines to adhere to their time schedules.

According to the invention, these and other objects are achieved by means of a system for the automatic identification of different types of aircraft having nose wheel and main landing gears and rolling on the ground, the system having at least one transmitter unit comprising several transmitter elements which, as seen in the direction of travel of the aircraft, are positioned after and/or alongside one another on or in the ground and over which the wheels of the nose wheel gear and/or at least one of the main landing gears is intended to roll for activation, and at least one receiver unit which is connected to said transmitter unit and which, on the basis of the transmitter elements activated by the wheels, suplies information about the type of aircraft concerned.

A presently especially preferred embodiment of the invention will be described in greater detail below, reference being had to the accompanying drawings in which

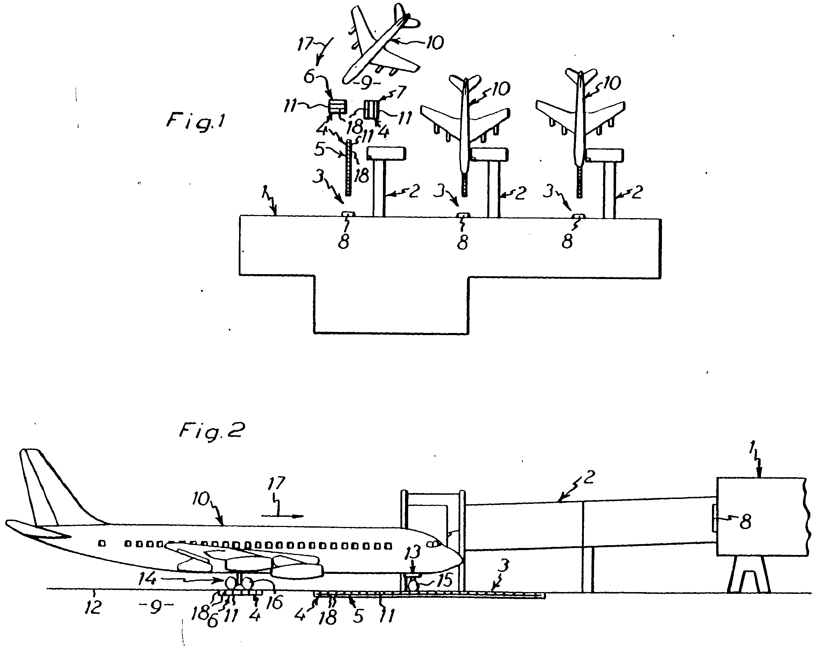

Fig. 1 illustrates schematically from above an airport arrivals building equipped with three passenger loading bridges, two aircraft being parked at the respective loading bridges, and a third aircraft rolling in towards its loading bridge to be parked with the aid of a visual parking guidance system;

Fig. 2 is a schematic side view of the third aircraft at a shorter distance from the passenger loading bridge and being handled by the system according to the invention which then activates the guidance system automatically and without the assistance of any ground personnel, whereby the aircraft can continue wholly automatically up to its predetermined stopping point; and

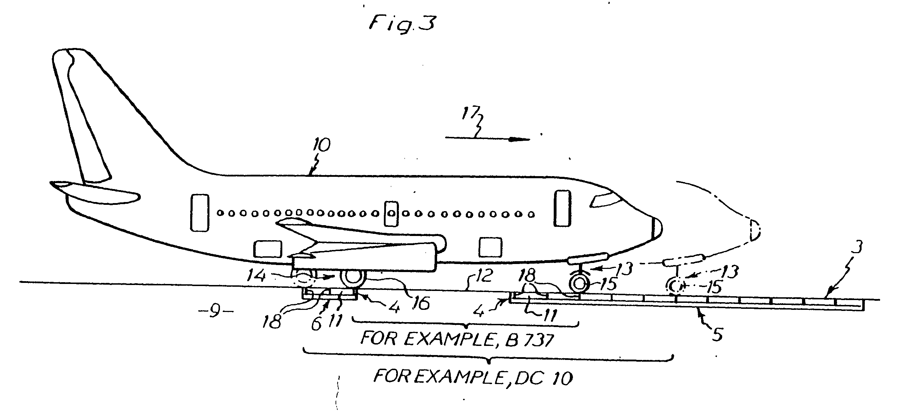

Fig. 3 is a schematic view of the design and function of the system.

Figs. 1 and 2 illustrate, as already mentioned, an airport arrivals building 1 having three passenger loading bridges 2 of known construction. Associated with each bridge 2 is a parking guidance system 3 preferably of the type disclosed by SE—B—403 999 (US—A—4 184 655). A system 4 according to the invention for the automatic identification of different types of aircraft is provided for each passenger loading bridge 2 and each parking guidance system 3. The three identification systems being identical in construction and function, only the identification system 4 pertaining to the passenger loading bridge 2 and its associated parking guidance system 3, shown farthest to the left in Fig. 1, will be described in detail. It is pointed out that the number of bridges, parking guidance systems and identification systems according to the invention naturally may vary from one airport building to another, and that actually such a building is not necessary for the proper function of the system. The identification system according to the invention can also be used without a passenger loading bridge and without a parking guidance system of the type here concerned.

The main components of the especially preferred embodiment of the identification system 4 illustrated in the drawings are three transmitter units 5, 6, 7 and a receiver unit 8.

The transmitter units 5, 6, 7 are in the form of plates 11 preferably cast in the ground 12 and located within the area 9 over which the aircraft 10 must pass before it reaches the bridge 2. The aircraft 10 has a nose wheel gear 13 and two main landing gears 14. The nose wheel ger 13 may have two wheels 15 and each main landing gear 14 may have four wheels 16.

The plates 11 of the transmitter units 5 and 6 are provided with several transmitter elements 18 which are arranged after one another as seen in the direction of travel 17 of the aircraft 10 and over which the wheels 15 of the nose wheel gear 13 and the wheels 16 of the main landing gear, respectively, are to pass. The transmitter elements 18 preferably are formed by elongated contactors, such as inductive loops, microtape or the like which are transverse to the direction of travel 17 of the aircraft 10 and are spaced equidistantly, say, 0.5 m apart in the direction of travel 17.

Different types of aircraft having different wheel bases, i.e. different distances between the nose wheel gear 13 and the main landing gears 14, it is possible, by measuring the distance between the wheels 15 and 16, to determine the type of aircraft moving on the ground 12, and thus to identify the aircraft type. By allowing the wheels 15 of the nose wheel gear 13 to roll over the transmitter elements 18 of the transmitter unit 5 and, correspondingly, allowing the wheels 16 of one main landing gear 14 to roll over the transmitter elements 18 of the transmitter unit 6, and by preprogramming the transmitter elements of the two units 5 and 6 into groups such that, when the forward wheels 16 of the main landing gear 14 concerned touch one of the transmitter elements 18 of the transmitter unit 6, the wheels 15 of the nose wheel gear 13 at the same time touch one of the transmitter elements 18 of the transmitter unit 5, it is possible exactly to determine the type of the aircraft that has passed over the preprogrammed transmitter elements.

If several aircraft types should have exactly the same wheel bases, it is possible, in order to distinguish between these aircraft types, to measure the track of the wheels 16 of the main landing gears 14 when these are rolling over the transmitter elements 18 of the transmitter units 6 and 7 simultaneously as the wheels 15 of the nose wheel gear 13 are rolling over a preprogrammed transmitter element 18 of the unit 5. The transmitter elements 18 of the units 6 and 7 being preprogrammed, the type of aircraft can be identified.

Instead of being formed of contactors, the elements 18 of the transmitter units 5, 6 and 7 can be, say, photoelectric cells or other elements emitting refractable light rays or sound-waves. The transmitter elements 18 of the units 5, 6 and 7 are connected to the receiver unit 8 which may comprise a microcomputer or a relay unit programme or encoded in such a manner that, when an element 18 in one of the units 5, 6, 7 is activated at the same times as an element 18 in the one of the other units, the receiver unit 8 emits a signal about the type of aircraft that has passed the identification system 4. The signals received from the transmitter unit 8 may be either digital or analog and can activate and/or control other airport equipment, such as the prior art parking guidance system 3 according to SE—B—403 999 and/or the adjacent passenger loading bridge 2.

**Claims**

1. A system for the automatic identification of different types of aircraft (10) having nose wheel and main landing gears (13, 14) and rolling on the ground (12), the system having at least one transmitter unit (5, 6, 7) comprising several transmitter elements (18) which, as seen in the direction of travel (17) of the aircraft (10), are positioned after and/or alongside one another on or in the ground (12) and over which the wheels (15, 16) of the nose wheel gear (13) and/or at least one of the man landing gears (14) is intended to roll for activation, and by at least one receiver unit (8) which is connected to said transmitter unit (5, 6, 7) and which, on the basis of the transmitter elements (18) activated by the wheels (15, 16), supplies information about the type of aircraft concerned.

2. A system as claimed in claim 1, characterized in that the information about the type of aircraft (10) concerned is obtained by measuring or calculating the distance between the transmitter elements (18) simultaneously activated by the wheels (15, 16), said distance corresponding substantially to the wheel base or track of the type of aircraft concerned.

3. A system as claimed in claim 1 or 2, characterized in that at least the elements (18) comprised by each transmitter unit (5, 6, 7) are spaced equidistantly apart in the direction of travel (17) of the aircraft (10).

4. A system as claimed in any one of the preceding claims, characterized in that the transmitter elements are formed of elongated contactors (18) directed transversely of the direction of travel (17) of the aircraft (10).

5. A system as claimed in claim 4, characterized in that the contactors (18) operate on the principle of inductive magnetic loops.

6. A system as claimed in claim 4, characterized in that the contacts (18) operate on the resistance strain principle.

7. A system as claimed in any of the preceding claims, characterized in that the receiver unit (8) is in the form of an indicator having a number of indicating elements corresponding to the number of transmitter elements (18) of each unit (5, 6, 7) and indicating the type of aircraft that has passed over the transmitter elements.

8. A system as claimed in any one of the preceding claims, characterized in that, when aircraft (10) has been identified in the transmitter unit (8), the latter can activate and/or control various airport equipment, such as a control system for parking aircraft, for extending passenger loading bridges etc.

9. A system as claimed in any one of the preceding claims, characterized in that, when the aircraft (10) has been identified, a recording tape can be started and supply oral information about the type of aircraft that has passed over the transmitter elements (18).

10. A system as claimed in any one of the preceding claims, characterized in that the transmitter elements (18) have been preprogrammed groupwise according to the type of aircraft (10) to identify the type of aircraft that has passed the transmitter elements (18) and to transmit a signal containing this information to the control tower or other location at the airport.

**Patentansprüche**

1. System für die selbsttätige Identifizierung von verschiedenen Typen von Flugzeugen (10), die mit Bugrad- und Haputfahrwerken (13, 14) ausgerüstet sind und auf dem Boden (12) rollen, umfassend zumindest eine Gebereinheit (5, 6, 7) mit mehreren, in der Fahrtrichtung (17) des Flugzeugs (10) gesehen hinter und/oder neben einander auf oder im Boden (12) angebrachten Gebegliedern (18), über die die Räder (15, 16) des Bugradfahrwerks (13) und/oder zumindest eines der Hauptfahrwerke (14) zwecks Aktivierung rollen sollen, sowie zumindest eine Empfängereinheit (8), die an die genannte Gebereinheit (5, 6, 7) angeschlossen ist und auf Grundlage der durch die Räder (15, 16) aktivierten Gebeglieder (18) Information über den infragestehenden Flugzeugtyp liefert.

2. System nach Anspruch 1, dadurch gekennzeichnet, das die Information über den Typ des infragestehenden Flugzeugs (10) durch Messen oder Berechnen des Abstands zwischen den von den Rädern (15, 16) gleichzeitig aktivierten Gebegliedern (18) erhältlich ist, welcher Abstand im wesentlichen dem Radstand oder der Spurweite des infragestehenden Flugzeugtyps entspricht.

3. System nach Anspruch 1 oder 2, dadurch gekennzeichnet, dass zumindest die von jeder Gebereinheit (5, 6, 7) umfassten Glieder (18) in der Fahrtrichtung (17) des Flugzeugs (10) gleichweit entfernt angeordnet sind.

4. System nach einem der vorhergehenden Ansprüche, dadurch gekennzeichnet, das die Gebeglieder aus länglichen, quer zur Fahrtrichtung (17) des Flugzeugs (10) gerichteten Kontaktgebern (18) gebildet sind.

5. System nach Anspruch 4, dadurch gekennzeichnet, dass die Kontaktgeber (18) gemäss dem Prinzip für induktive Magnetschliefen arbeiten.

6. System nach Anspruch 4, dadurch gekennzeichnet, dass die Kontaktgeber (18) gemäss dem Dehnungsmessstreifen-Prinzip arbeiten.

7. System nach einem der vorhergehenden Ansprüche, dadurch gekennzeichnet, dass die Empfängereinheit (8) in Form eines Indikators mit einer der Anzahl Gebeglieder (18) jeder Einheit (5, 6, 7) entsprechenden Anzahl Anziegeglieder ist, welche den Typ des über die Gebeglieder gerollten Flugzeugs anzeigen.

8. System nach einem der vorhergehenden Ansprüche, dadurch gekennzeichnet, dass die Gebereinheit (8), nachdem sie das Flugzeug (10) identifiziert hat, verschiedene Flughafenausrüstungen aktivieren und/oder steuern kann, wie ein Steuersystem zum Abstellen für Flugzeugen, zum Ausfahren von Fluggastbrücken usw.

9. System nach einem der vorhergehenden Ansprüche, dadurch gekennzeichnet, dass nach der Identifizierung des Flugzeugs (10) ein Tonband gestartet werden und mündliche Auskunft über den Typ des über die Gebeglieder (18) gerollten Flugzeugs geben kann.

10. System nach einem der vorhergehenden Ansprüche, dadurch gekennzeichnet, dass die Gebeglieder (18) gruppenweise nach dem Typ des Flugzeugs (10) programmiert worden sind, um den typ des über die Gebeglieder (18) gerollten Flugzeugs zu identifizieren und an den Kontrollturm oder einen anderen Ort im Flughafen ein dieses Auskunft enthaltendes Signal abzugeben.

**Revendications**

1. Système permettant l'identification automatique de types différents d'aéronefs (10) possédant des trains de roues avant et d'atterrissage principaux (13, 14) et rulant sur le sol (12), le système possédant au moins une unité émettrice (5, 6, 7) comprenant pluseirus éléments émetteurs (18) qui, lorsqu'on les observe dans le sens de déplacement (17) de laéronef (10), sont disposés les uns après les autres et, ou bien, les uns à côté des autres sur ou dans le sol (12) et sur lesquels les roues (15, 16) du train de roues avant (13) et, ou bien, d'au moins un des trains d'atterrissage principaux (14) sont destinées à rouler pour les rendre actifs, et au moins une unité réceptrice (8) qui est connectée à ladite unité émettrice (5, 6, 7) et qui, sur la base des éléments émetteurs (18) rendus actifs par les roues (15, 16), délivre une information relativement au type d'aéronef considéré.

2. Système selon la revendication 1, caractérisé en ce que l'information relative au type d'aéronef (10) considéré est obtenue par mesure ou calcul de la distance existant entre les éléments émetteurs (18) qui sont rendus actifs simultanément par les roues (15, 16), ladite distance correspondant sensiblement à la base ou à la trace des roues du type d'aéronef considéré.

3. Système selon la revendication 1 ou 2, caractérisé en ce qu'au moins les éléments (18) compris pa chaque unité émettrice (5, 6, 7) sont uniformément séparés les uns des autres suivant la direction de déplacement (17) de l'aéronef (10).

4. Système selon l'une quelconque des revendications précédentes, caractérisé en ce que les éléments émetteurs sont formés de contacteurs allongés (18) qui sont dirigés transversalement au sens de déplacement (17) de l'aéronef (10).

5. Système selon la revendication 4, caractérisé en ce que les contacteurs (18) fonctionnent sur le principe de boucles d'induction magnétique.

6. Système selon la revendication 4, caractérisé en ce que les contacteurs (18) fonctionnnent sur le principe de la contrainte de résistance.

7. Système selon l'une quelconque des revendications précédentes, caractérisé en ce que l'unité réceptrice (8) se présente sous la forme d'un indicateur possédant un nombre d'éléments indicateurs correspondant au nombre d'éléments émetteurs (18) de chaque unité (5, 6, 7) et indiquant le type d'aéronef qui est passé sur les éléments émetteurs.

8. Système selon l'une quelconque des revendications précédentes, caractérisé en ce que, lorsque l'aéronef (10) a été identifié dans l'unité réceptrice (8), cette dernière peut rendre actifs et, ou bien, commander divers équipements de l'aéroport, par exemple un système de commande pour le stationnement de l'aéronef, ou pour l'extension de passerelles d'embarquement de passagers, etc.

9. Système selon l'une quelconque des revendications précédentes, caractérisé en ce que, lorsque l'aéronef (10) a été identifié, on peut faire démarrer une bande d'enregistrement et fournir une information orale relativement au type d'aéronef qui est passé sur les éléments émetteurs (18).

10. Système selon l'une quelconque des revendications précédentes, caractérisé en ce que les éléments émetteurs (18) ont été préprogrammés par groupes selon le type d'aéronef (10) pour identifier le type d'aéronef qui est passé sur les éléments émetteurs (18) et pour transmettre un signal contenant cette information à la tour de contrôle ou à un autre emplacement de l'aéroport.

Fig.1

Fig.2

Fig.3